# EUROPÄISCHE PATENTSCHRIFT

(11) **EP 4 578 086 B1**
(45) Veröffentlichungstag und Bekanntmachung des Hinweises auf die Patenterteilung: **08.10.2025**
(21) Anmeldenummer: 23789972.9
(22) Anmeldetag: 12.10.2023
(51) Int. Cl.: H02K 15/35, H01R 43/02, H01F 41/04

(54) **VORRICHTUNG ZUM FÜGEN VON LÄNGLICHEN BAUTEILBEREICHEN VON WICKLUNGSELEMENTEN WENIGSTENS EINER WICKLUNG EINER ELEKTRISCHEN MASCHINE SOWIE VERWENDUNG EINER SOLCHEN VORRICHTUNG**
DEVICE FOR JOINING ELONGATE COMPONENT REGIONS OF WINDING ELEMENTS OF AT LEAST ONE WINDING OF AN ELECTRIC MACHINE, AND USE OF SUCH A DEVICE
DISPOSITIF D'ASSEMBLAGE DE ZONES DE COMPOSANTS ALLONGÉS D'ÉLÉMENTS D'ENROULEMENT D'AU MOINS UN ENROULEMENT D'UNE MACHINE ÉLECTRIQUE, ET UTILISATION D'UN TEL DISPOSITIF

(30) Priorität: 17.10.2022 DE 102022003824
(43) Veröffentlichungstag der Anmeldung: 02.07.2025
(73) Patentinhaber: Mercedes-Benz Group AG, 70372 Stuttgart (DE)
(72) Erfinder: STEFFENS, Dirk, 71384 Weinstadt (DE)
(74) Vertreter: Novagraaf Group
(86) Internationale Anmeldenummer: PCT/EP2023/078421
(87) Internationale Veröffentlichungsnummer: WO 2024/083655

(56) Entgegenhaltungen:
- DE-A1- 102013 225 667
- DE-A1- 102018 128 918
- US-A1- 2022 069 679

## Beschreibung

Die Erfindung betrifft eine Vorrichtung zum Fügen von länglichen Bauteilbereichen von Wicklungselementen wenigstens einer Wicklung einer elektrischen Maschine. Die Erfindung betrifft auch eine Verwendung einer solchen Vorrichtung.

Der JP 2014-7794 A1, der JP 2014-7795 A1, der US 2022/069679 A1 und der JP 2014-183623 A sind elektrische Maschinen mit jeweiligen Wicklungen als bekannt zu entnehmen, welche jeweilige Wicklungselemente aufweisen, mithin durch die Wicklungselemente gebildet sind. Dabei sind jeweilige länglichen Bauteilbereiche der jeweiligen Wicklungselemente miteinander verschweißt und dadurch miteinander verbunden, mithin miteinander gefügt.

Des Weiteren offenbart die WO 2020/210855 A1 ein Verfahren zum Positionieren eines Laserstrahls beim Schweißen von elektrischen Leiterenden eines elektrischen Bauteils.

Aufgabe der vorliegenden Erfindung ist es, eine Vorrichtung und eine Verwendung einer solchen Vorrichtung zu schaffen, so dass längliche Bauteilbereiche von Wicklungselementen wenigstens einer Wicklung einer elektrischen Maschine besonders vorteilhaft miteinander gefügt werden können.

Diese Aufgabe wird durch eine Vorrichtung mit den Merkmalen des Patentanspruchs 1 sowie durch eine Verwendung mit den Merkmalen des Patentanspruchs 5 gelöst.

Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zum Fügen von, insbesondere stiftartigen, länglichen Bauteilbereichen von Wicklungselementen wenigstens einer Wicklung einer elektrischen Maschine. Unter dem Merkmal, dass die länglichen Bauteilbereiche beispielsweise stiftartig, mithin stiftförmig ausgebildet sind, ist insbesondere zu verstehen, dass sich der jeweilige längliche Bauteilbereich entlang seiner jeweiligen Längserstreckungsrichtung länglich und somit beispielsweise linienförmig und linienartig und dabei insbesondere gerade erstreckt. Der jeweilige längliche Bauteilbereich ist Bestandteil eines jeweiligen Bauteils, welches das jeweilige Wicklungselement ist. Insbesondere können längliche Bauteilbereiche selbst als jeweilige Bauteile verstanden werden, die miteinander gefügt, mithin miteinander verschweißt werden. Insbesondere sind die Bauteile beziehungsweise die Wicklungselemente separat voneinander ausgebildet, wobei die Bauteile beziehungsweise die Wicklungselemente miteinander gefügt werden. Beispielsweise werden die Bauteile beziehungsweise Wicklungselemente miteinander verschweißt und dadurch miteinander verbunden, insbesondere durch Laserstrahlschweißen.

Insbesondere sind die Wicklungselemente Steckspulen, insbesondere mit einer jeweiligen U-Geometrie, wobei die Steckspulen auch als Hairpins (Haarnadeln) bezeichnet werden. Dabei ist die wenigstens eine Wicklung gemäß der so genannten Hairpin-Technologie aus den Steckspulen aufgebaut, mithin zusammengesetzt. Dabei ist beispielsweise der jeweilige längliche Bauteilbereich ein jeweiliger Schenkel der jeweiligen U-Geometrie.

Um nun die länglichen Bauteilbereiche auf besonders einfache und prozesssichere Weise präzise relativ zueinander ausrichten und fest relativ zueinander und dabei insbesondere aneinander fixieren zu können, so dass die länglichen Bauteilbereiche beispielsweise durch Schweißen, insbesondere Laserstrahlschweißen, besonders vorteilhaft und prozesssicher miteinander gefügt, das heißt miteinander verbunden werden können, weist die auch als Werkzeug bezeichnete und beispielsweise als Spannwerkzeug oder Klemmwerkzeug ausgebildete oder als Spannwerkzeug oder Klemmwerkzeug fungierende Vorrichtung ein erstes Werkzeugteil auf, welches auch als erste Werkzeughälfte bezeichnet wird. Das erste Werkzeugteil weist eine Aufnahme auf, welche, insbesondere innenumfangsseitig, konisch ausgebildet ist und sich dadurch in eine Erstreckungsrichtung verjüngt. Die Vorrichtung weist auch ein zweites Werkzeugteil auf, welches auch als zweite Werkzeughälfte bezeichnet wird. Das zweite Werkzeugteil weist einen Grundkörper und zwei auch als Klemmfinger oder Spannstifte bezeichnete Spannfinger auf, die beispielsweise in die Erstreckungsrichtung von dem Grundkörper abstehen. Die Spannfinger sind entlang einer senkrecht zur Erstreckungsrichtung verlaufenden Abstandsrichtung voneinander beabstandet. Der jeweilige Spannfinger ist um eine jeweilige Schwenkachse relativ zu dem Grundkörper verschwenkbar an dem Grundkörper gehalten, wobei die Schwenkachsen entlang der Abstandsrichtung voneinander beabstandet sind. Die jeweilige Schwenkachse verläuft dabei senkrecht zur Erstreckungsrichtung und senkrecht zur Abstandsrichtung. Mit anderen Worten spannen beispielsweise die Erstreckungsrichtung und die Abstandsrichtung eine Erstreckungsebene auf, wobei die jeweilige Schwenkachse senkrecht zur Erstreckungsebene verläuft. Die Spannfinger sind in die Aufnahme hinein bewegbar, insbesondere dadurch, dass das zweite Werkzeugteil in die Erstreckungsrichtung relativ zu dem ersten Werkzeugteil, insbesondere translatorisch, bewegt wird. Durch insbesondere in die Erstreckungsrichtung verlaufendes Hineinbewegen der Spannfinger in die Aufnahme sind die Spannfinger um die Schwenkachsen relativ zu dem Grundkörper derart verschwenkbar, dass die Spannfinger aufeinander zu verschwenkbar sind. Dadurch sind oder werden die insbesondere entlang der Abstandsrichtung zwischen den Spannfingern angeordneten oder anordenbaren und insbesondere entlang der Abstandsrichtung aufeinanderfolgend angeordneten oder anordenbaren länglichen Bauteilbereiche zwischen den Spannfingern geklemmt und insbesondere aneinander gedrückt und in der Folge relativ zueinander fixiert. Außerdem werden die länglichen Bauteilbereiche dadurch, dass die Spannfinger aufeinander zu verschwenkt werden, während die länglichen Bauteilbereiche insbesondere entlang der Abstandsrichtung zwischen den Spannfingern angeordnet sind, beispielsweise dann, wenn die länglichen Bauteilbereiche zunächst einen Versatz zueinander aufweisen, relativ zueinander bewegt und dabei insbesondere aufeinander zu bewegt und dadurch in eine vorteilhafte Fügeposition gebracht, in welcher die länglichen Bauteilbereiche mittels der Spannfinger insbesondere durch Klemmen der länglichen Bauteilbereiche gehalten werden. In der Fügeposition weisen längliche Bauteilbereiche eine vorteilhafte Lage, Positionierung oder Ausrichtung relativ zueinander auf, so dass in der Folge die länglichen Bauteilbereiche prozesssicher miteinander gefügt, insbesondere miteinander verschweißt und dadurch miteinander gefügt, werden können. Insbesondere werden beispielsweise die länglichen Bauteilbereiche dadurch, dass die länglichen Bauteilbereiche miteinander gefügt werden, auch elektrisch leitfähig miteinander verbunden, so dass die Erfindung eine präzise und prozesssichere sowie zeit- und kostengünstig durchführbare mechanische und elektrische Verbindung der länglichen Bauteilbereiche miteinander ermöglicht.

Das erste Werkzeugteil ist beispielsweise als, insbesondere massiver, C-Bügel ausgebildet, in dessen Aufnahme die verschwenkbaren, mithin drehbaren Spannfinger hineinbewegt werden können. Da die Spannfinger um die Schwenkachsen relativ zu dem Grundkörper drehbar sind, sind die Spannstifte beweglich. Durch eine entsprechende Verfahrbewegung der Werkzeugteile derart, dass die Spannstifte in die Aufnahme hineinbewegt werden, werden die Spannstifte (Spannfinger) zusammengefahren, mithin aufeinander zu verschwenkt, wodurch beispielsweise die Spannfinger die zu fügenden länglichen Bauteilbereiche aufnehmen und dabei insbesondere relativ zueinander ausrichten und aneinander fixieren. Beispielsweise durch eine konische Formung der Spannfinger schieben oder drehen sich diese mit fortschreitender Verfahrbewegung entlang des C-Bügels derart zusammen, dass sie die länglichen Bauteilbereiche in ihrer auch als Endstellung bezeichnete Fügeposition bringen und die länglichen Bauteilbereiche fest in der Fügeposition fixieren, insbesondere ohne beziehungsweise mit einem möglichst geringen Spalt zwischen den länglichen Bauteilbereichen und ohne beziehungsweise mit einer möglichst geringen Verdrehung der länglichen Bauteilbereiche. Insbesondere ist es denkbar, dass die Werkzeugteile und die Spannfinger hinsichtlich ihrer Winkel aufeinander abgestimmt sind, um eine vorteilhafte Spannfunktion zu realisieren, in deren Rahmen die länglichen Bauteilbereiche mittels der Vorrichtung besonders vorteilhaft geklemmt, das heißt gespannt und dadurch präzise relativ zueinander positioniert und relativ zueinander fixiert, insbesondere aneinander fixiert, werden können. Die Werkzeugteile können beispielsweise mechanisch über wenigstens eine oder mehrere Achsen, über wenigstens einen oder mehrere Motoren und/oder durch wenigstens eine oder mehrere andere Einrichtungen festgestellt werden, das heißt, insbesondere relativ zueinander fixiert werden, um dadurch die länglichen Bauteilbereiche während des Fügens der länglichen Bauteilbereiche vorteilhaft relativ zueinander fixieren zu können. Ferner kann beispielsweise die Vorrichtung als Einfach- oder Mehrfachwerkzeug eingesetzt werden.

Der Erfindung liegen insbesondere die folgenden Erkenntnisse und Überlegungen zugrunde: Auch als Hairpins bezeichnete Steckspulen für elektrische Maschinen, insbesondere für Elektromotoren, werden nach aktuellem Stand der Technik mittels Laserstrahlschweißen miteinander verbunden, mithin miteinander gefügt. Hierzu ist es von Vorteil, die Steckspulen, insbesondere die länglichen Bauteilbereiche der Steckspulen, exakt zueinander zu positionieren, so dass fehlerhafte Schweißverbindungen aufgrund eines möglichen Spalts, einer möglichen Verdrehung, etc. vermieden werden können. Hinsichtlich Konstruktionen der elektrischen Maschine wird unter anderem zwischen Radialfluss- und Axialflussmaschine unterschieden. Insbesondere zeigt sich der Aufbau von Axialflussmaschinen durch einen beengten Bauraum verantwortlich für eine sehr begrenzte Zugänglichkeit für Spannwerkzeuge, um die länglichen Bauteilbereiche während ihres Fügens relativ zueinander zu fixieren. Die erfindungsgemäße Vorrichtung ermöglicht es nun, die länglichen Bauteilbereiche, während sie gefügt werden, insbesondere auch dann relativ zueinander fixieren zu können, wenn eine nur begrenzte oder beengte Zugänglichkeit zu den länglichen Bauteilbereichen existiert.

Ein zweiter Aspekt der Erfindung betrifft eine Verwendung einer Vorrichtung gemäß dem ersten Aspekt der Erfindung, wobei die Vorrichtung verwendet wird, um längliche Bauteilbereiche von insbesondere als Steckspulen ausgebildeten Wicklungselementen wenigstens einer Wicklung einer elektrischen Maschine miteinander zu fügen. Insbesondere werden die länglichen Bauteilbereiche mittels der Vorrichtung relativ zueinander und insbesondere aneinander fixiert, während die länglichen Bauteilbereiche miteinander gefügt, insbesondere miteinander verschweißt und dadurch miteinander gefügt, werden. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Die Spannfinger werden beispielsweise derart in der Aufnahme angeordnet, dass sie auch als Klauen bezeichnet oder als Klauen ausgebildete Werkzeugteile aufeinander zugeschoben, mithin zusammengeschoben werden. Dadurch, dass durch das Hineinbewegen der Spannfinger in die Aufnahme die Spannfinger aufeinander zu geschwenkt werden, üben die Spannfinger auf die entlang der Abstandsrichtung zwischen den Spannfingern angeordneten und entlang der Abstandsrichtung aufeinander folgenden länglichen Bauteilbereiche eine Spannkraft auf, die entlang der Abstandsrichtung und somit orthogonal zur Erstreckungsrichtung verläuft. Ferner ist es denkbar, dass durch das Zusammenschieben der Werkzeugteile die länglichen Bauteilbereiche entlang einer mit der Erstreckungsrichtung zusammenfallenden Spannrichtung zwischen Werkzeugteilen geklemmt beziehungsweise an den Werkzeugteilen abgestützt werden, so dass die länglichen Bauteilbereiche nicht nur entlang der Abstandsrichtung, sondern auch entlang der Spannrichtung zwischen den Werkzeugteilen geklemmt und somit präzise und fest relativ zueinander fixiert beziehungsweise aneinander fixiert, werden. Sind die beispielsweise als Stege ausgebildeten länglichen Bauteilbereiche zunächst derart relativ zueinander positioniert oder unpositioniert, dass die länglichen Bauteilbereiche zunächst einen Versatz zueinander aufweisen, so werden längliche Bauteilbereiche durch deren Anordnung zwischen den Spannfingern und in der Aufnahme durch das Zusammenschieben der Werkzeugteile relativ zueinander bewegt und somit vorteilhaft und präzise relativ zueinander ausgerichtet, derart, dass die länglichen Bauteilbereiche in die Fügeposition bewegt werden. Mittels der Werkzeugteile werden die länglichen Bauteilbereiche in der Fügeposition gehalten, insbesondere werden die länglichen Bauteilbereiche miteinander gefügt werden. Insbesondere ermöglicht es das erfindungsgemäße Werkzeug, die länglichen Bauteilbereiche sowohl entlang der Abstandsrichtung als auch entlang der Spannrichtung zu bewegen und zu positionieren, wobei die Abstandsrichtung und die Spannrichtung senkrecht zueinanderstehen. In der Folge können die länglichen Bauteilbereiche beispielsweise durch Laserschweißen sicher und fest miteinander verbunden, mithin miteinander gefügt werden. Hierbei kann durch eine gute Positionierung der länglichen Bauteilbereiche, insbesondere von freien Enden der länglichen Bauteilbereiche, zueinander auch ein einfaches Laserschweißen ermöglicht werden, um prozesssicher und betriebssicher schweißen zu können.

Der jeweilige längliche Bauteilbereich weist beispielsweise einen zumindest im Wesentlichen rechteckigen Querschnitt auf, wobei beispielsweise der längliche Bauteilbereich beziehungsweise ihre Querschnitte in der Fügeposition parallel zueinander liegen. In der Folge bilden beispielsweise die zwischen den Werkzeugteilen geklemmten länglichen Bauteilbereiche, insbesondere Querschnitte, eine insgesamt rechteckige Form.

Vorzugsweise sind die auch als Arm oder Spannarme bezeichneten Spannfinger, insbesondere außenseitig oder außenumfangsseitig, konisch ausgeführt, so dass sie außenseitig beziehungsweise außenumfangsseitig die Form eines Kegels oder Kegelstumpfes mit einem ersten Winkel aufweisen, dessen erster Winkel beispielsweise an einen zweiten Winkel der konischen Aufnahme angepasst ist, mithin dem zweiten Winkel entspricht. Daraus resultiert bei einem Zusammendrücken der Spannfinger und somit der länglichen Bauteilbereiche und somit bei einem Zusammenwirken der Spannfinger mit den länglichen Bauteilbereichen zumindest im Wesentlichen eine Rechteckform in der Vorrichtung, derart, dass Innenseiten der Spannfinger flächig an Außenseiten der länglichen Bauteilbereiche anliegen, wobei die jeweilige Innenseite und die jeweilige Außenseite in einer Ebene liegen, welche beispielsweise parallel zur Erstreckungsrichtung verläuft.

Insbesondere in der Ausführung der elektrischen Maschine beziehungsweise der länglichen Bauteilbereiche, insbesondere deren Enden, kann die als Klemmvorrichtung ausgebildete oder fungierende Vorrichtung direkt seitlich oder über gewinkelt angeordnete Klemmbacken mit den länglichen Bauteilbereichen zusammenwirken, wobei eine Kraftrichtung beispielsweise immer seitlich zu den Enden der länglichen Bauteilbereiche erfolgt. Damit kann auch bei nicht seitlich zugänglichen Schweißstellen eine Verklemmung der länglichen Bauteilbereiche erfolgen.

In aufeinander zu geschwenktem Zustand der Spannfinger wirkt auf diese beispielsweise eine Rückstellkraft, welche insbesondere eine Rückstellfederkraft ist, die beispielsweise durch eine Rückstellfeder bereitgestellt wird. Werden dann beispielsweise die Werkzeugteile auseinandergeschoben, mithin voneinander wegbewegt, so werden beispielsweise die Spannfinger mittels der Rückstellkraft voneinander weggeschwenkt und dadurch geöffnet, wodurch beispielsweise die Spannfinger in eine Ausgangsposition gedreht werden, von der ausgehend die Spannfinger dann wieder aufeinander zu verschwenkt werden, wenn die Spannfinger in die Aufnahme hineinbewegt werden. Somit kann die Vorrichtung einfach und zeit- und kostengünstig zum wiederholten, aufeinanderfolgenden Klemmen von jeweiligen länglichen Bauteilbereichen genutzt werden.

Insbesondere können durch die Erfindung zumindest die folgenden Vorteile realisiert werden:
- besondere Eignung für das Laserstrahlschweißen von Steckspulen (Hairpins) einer Axialflussmaschine
- sehr gute sowie exakte Zustellung der zu fügenden länglichen Bauteilbereiche, somit vorteilhafte Schweißbedingungen
- Reduzierung Bauteilausschuss
- Ausgleich von sowohl lateralem Versatz der länglichen Bauteilbereiche als auch Verdrehung möglich
- lediglich geringe Zugänglichkeit erforderlich
- neue Gestaltungsmöglichkeiten
- flexible Anwendung an oder für sowohl Axialflussmaschinen als auch Radialflussmaschinen
- spezielle Eignung für das Schweißen von Verbindungen in geringerer Stückzahl
- Fixierung von zwei oder mehreren länglichen Bauteilbereichen beziehungsweise Steckspulen möglich

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Draufsicht einer Vorrichtung zum Fügen von länglichen Bauteilbereichen von Wicklungselementen wenigstens einer Wicklung einer elektrischen Maschine;
- Fig. 2: eine weitere schematische Draufsicht der Vorrichtung; und
- Fig. 3: schematische Seitenansichten der Vorrichtung.

In den Figuren sind gleiche oder funktionsgleiche Elemente mit gleichen Bezugszeichen versehen.

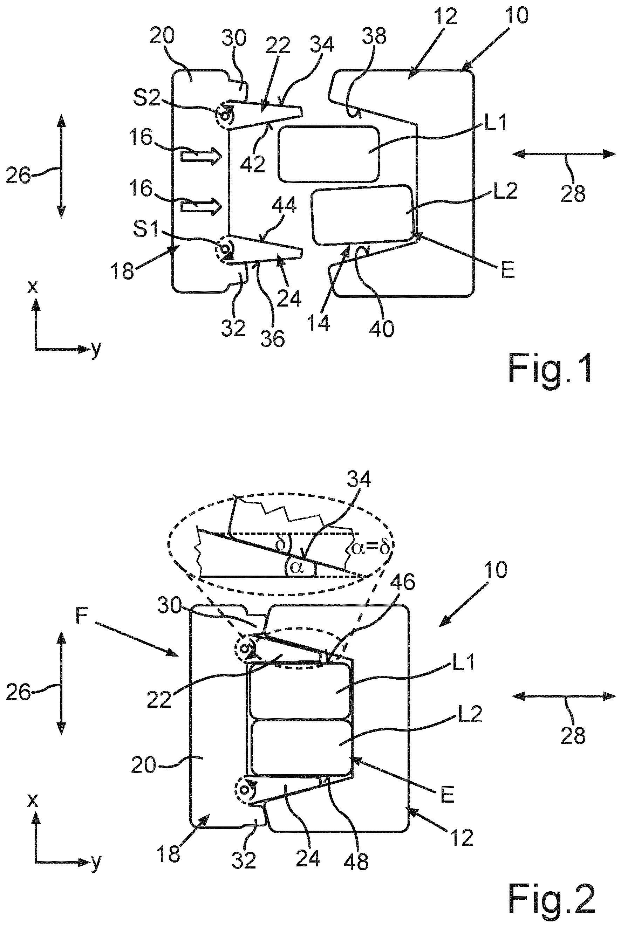

Fig. 1 zeigt in einer schematischen Draufsicht eine auch als Werkzeug bezeichnete und beispielsweise als Klemmwerkzeug oder Spannwerkzeug ausgebildete oder als Spannwerkzeug oder Klemmwerkzeug fungierende Vorrichtung 10 zum Fügen von länglichen Bauteilbereichen L1 und L2 von Wicklungselementen wenigstens einer Wicklung einer elektrischen Maschine. Bei dem jeweiligen Wicklungselement handelt es sich beispielsweise um Steckspule, welche auch als Hairpin bezeichnet wird. Die genannte, wenigstens eine Wicklung der elektrischen Maschine ist beispielsweise gemäß der so genannten Hairpin-Technologie aus den Steckspulen (Hairpins) zusammengesetzt, mithin gebildet. Dabei ist beispielsweise der längliche Bauteilbereich L1 ein länglicher Bauteilbereich eines ersten der Wicklungselemente, und der längliche Bauteilbereich L2 ist ein länglicher Bauteilbereich eines zweiten der Wicklungselemente. Das erste Wicklungselement und das zweite Wicklungselement sind separat voneinander ausgebildet, wobei die länglichen Bauteilbereiche L1 und L2 und somit das erste Wicklungselement und das zweite Wicklungselement miteinander gefügt, das heißt miteinander verbunden werden. Beispielsweise werden die länglichen Bauteilbereiche L1 und L2 miteinander verschweißt und dadurch sowohl mechanisch als auch elektrisch miteinander verbunden. Das Verschweißen der länglichen Bauteilbereiche L1 und L2 erfolgt beispielsweise durch Laserschweißen, mithin durch eine Laserstrahlschweißung. Wie im Folgenden noch genauer erläutert wird, wird die Vorrichtung 10 bei dem Fügen der länglichen Bauteilbereiche L1 und L2, insbesondere während des Fügens der länglichen Bauteilbereiche L1 und L2 genutzt, um die länglichen Bauteilbereiche L1 und L2 relativ zueinander und dabei insbesondere aneinander zu fixieren.

Aus Fig. 1 ist erkennbar, dass die länglichen Bauteilbereiche L1 und L2, deren jeweilige, freie Enden mit E bezeichnet sind, zunächst einen Versatz zueinander aufweisen. Wie im Folgenden noch genauer erläutert wird, werden die länglichen Bauteilbereiche L1 und L2 mit der Vorrichtung 10 relativ zueinander positioniert, mithin relativ zueinander ausgerichtet. Hierfür werden die länglichen Bauteilbereiche L1 und L2, insbesondere ihre freien Enden E, mittels der Vorrichtung 10 relativ zueinander bewegt und dadurch in eine in Fig. 2 gezeigte Fügeposition F bewegt. Die länglichen Bauteilbereiche L1 und L2 nehmen die Fügeposition F ein, während sie miteinander verbunden werden, wobei die länglichen Bauteilbereiche L1 und L2 mittels des Werkzeugs (Vorrichtung 10) in der Fügeposition F gehalten werden.

Die Vorrichtung 10 weist ein erstes Werkzeugteil 12 auf, welches eine Aufnahme 14 aufweist. Die Aufnahme 14 ist innenseitig, das heißt innenumfangsseitig, konisch ausgebildet, derart, dass sich die Aufnahme 14 in eine in Fig. 1 durch Pfeile 16 veranschaulichte Erstreckungsrichtung verjüngt.

Die Vorrichtung 10 weist ein zweites Werkzeugteil 18 auf, welches einen Grundkörper 20 und zwei Spannfinger 22 und 24 aufweist. Die Spannfinger 22, 24 werden auch als Arme, Spannarme oder Spannstifte bezeichnet. Der jeweilige Spannfinger 22, 24 ist um eine jeweilige Schwenkachse S1, S2 relativ zu dem Grundkörper 20 verschwenkbar an dem Grundkörper 20 gehalten. Es ist erkennbar, dass die Spannfinger 22 und 24 entlang einer durch einen Doppelpfeil 26 veranschaulichten Abstandsrichtung voneinander beabstandet sind, wobei die Schwenkachsen S1 und S2 entlang der Abstandsrichtung voneinander beabstandet sind. In Fig. 1 ist durch einen Doppelpfeil 28 eine auch als Fixierrichtung bezeichnete Spannrichtung veranschaulicht, welche mit der Erstreckungsrichtung zusammenfällt. Entlang der Abstandsrichtung schließt sich an den jeweiligen Spannfinger 22, 24 ein jeweiliger, äußerer Anschlag 30, 32 an, welcher im Folgenden noch genauer erläutert wird. Außerdem sind in den Figuren paarweise senkrecht zueinander verlaufende Raumrichtungen mit x, y und z bezeichnet.

Bei dem in den Figuren gezeichneten Ausführungsbeispiel ist das auch als erste Werkzeughälfte bezeichnete, erste Werkzeugteil 12 als ein massiver C-Bügel ausgebildet. Aus Fig. 1 und 2 ist erkennbar, dass die länglichen Bauteilbereiche L1 und L2 beispielsweise in der Aufnahme 14 angeordnet werden. Die länglichen Bauteilbereiche L1 und L2 werden auch zwischen den Spannfingern 22 und 24 angeordnet, insbesondere derart, dass die länglichen Bauteilbereiche L1 und L2 entlang der Abstandsrichtung zwischen den Spannfingern 22, 24 angeordnet und entlang der Abstandsrichtung aufeinanderfolgend angeordnet sind. Insbesondere daraufhin werden die Werkzeugteile 12 und 18 entlang der Spannrichtung aufeinander zu bewegt, insbesondere zusammengeschoben, derart, dass die Spannfinger 22 und 24 in die Erstreckungsrichtung in die Aufnahme 14 hineinbewegt werden. Dabei gleiten jeweilige, entlang der Abstandsrichtung voneinander abgewandte Außenflächen 34 und 36 der Spannfinger 22 und 24 an jeweiligen Innenflächen 38 und 40 des Werkzeugteils 12, insbesondere direkt, ab, wobei die Innenflächen 38 und 40 entlang der Abstandsrichtung voneinander beabstandet sind und die Aufnahme 14, insbesondere direkt, begrenzen. Die jeweilige Innenfläche 38, 40 verläuft in einer jeweiligen Innenflächenebene, wobei die Innenflächenebene parallel zur jeweiligen Schwenkachse S1, S2 und schräg zur Abstandsrichtung und schräg zur Erstreckungsrichtung und somit schräg zur Spannrichtung verläuft. Außerdem verlaufen die Innenflächenebenen in die Erstreckungsrichtung betrachtet aufeinander zu.

Fig. 1 zeigt die Spannfinger 22 und 24 in einer jeweiligen Ausgangslage der Spannfinger 22 und 24. In der Ausgangslage sind die Außenflächen 34 und 36 an den Anschlägen 30 und 32 abgestützt. Auch der jeweilige Spannfinger 22, 24 ist konisch ausgebildet, vorliegend derart, dass der jeweilige Spannfinger 22, 24 die jeweilige Außenfläche 34, 36 und eine jeweilige, weitere Innenfläche 42, 44 aufweist. Die jeweilige Außenfläche 34, 36 und die jeweilige Innenfläche 42, 44 des jeweiligen Spannfingers 22, 24 bilden ein jeweiliges Flächenpaar, wobei die jeweilige Außenfläche 34, 36 und die jeweilige Innenfläche 42, 44 des jeweiligen Flächenpaares auch als Flächen bezeichnet werden. Es ist erkennbar, dass die Flächen des Flächenpaares in jeweiligen Flächenebenen verlaufen, derart, dass die jeweilige Außenfläche 34, 36 in einen jeweiligen ersten der Flächenebenen und die jeweilige Innenfläche 42, 44 in einer jeweiligen, zweiten der Flächenebenen verläuft. Die Flächenebenen des jeweiligen Flächenpaares verlaufen parallel zur jeweiligen Schwenkachse S1 und S2 und schräg zur Erstreckungsrichtung und schräg zur Spannrichtung, derart, dass die jeweiligen Flächenebenen des jeweiligen Flächenpaares in die Erstreckungsrichtung aufeinander zu verlaufen. Dabei schließt beispielsweise die Innenflächenebene mit der Erstreckungsrichtung beziehungsweise mit der Spannrichtung einen ersten Winkel ein, und in der Ausgangslage schließt beispielsweise die jeweilige, zweite Flächenebene mit der Erstreckungsrichtung einen zweiten Winkel ein, wobei der erste Winkel und der zweite Winkel vorzugsweise gleich sind, mithin wobei der zweite Winkel dem ersten Winkel entspricht.

Aus Fig. 2 ist erkennbar, dass durch das Zusammenschieben der Werkzeugteile 12 und 18 und das daraus resultierende Bewegen der Spannfinger 22, 24 in der Aufnahme 14 die Außenflächen 34 und 36 in Stützanlage mit den Innenflächen 38 und 40 und die Innenflächen 42 und 44 in, direkter, Stützanlage mit korrespondierenden, weiteren Außenflächen 46 und 48 der länglichen Bauteilbereiche L1 und L2 kommen. Somit zeigt Fig. 2 einen Zustand, in welchem die Außenflächen 34, 36, insbesondere direkt, an den Innenflächen 38 und 40 und die Innenflächen 42 und 44, insbesondere direkt an den Außenflächen 46 und 48 anliegen. In diesem Zustand befinden sich die Spannfinger 22 und 24 in einer von der Ausgangslage unterschiedlichen Spannlage. In der Spannlage verlaufen die zweiten Flächenebenen parallel zueinander und parallel zur Erstreckungsrichtung und somit parallel zur Spannrichtung. Die ersten Flächenebenen verlaufen schräg zueinander sowie schräg zur Erstreckungsrichtung und schräg zur Spannrichtung und parallel zur jeweiligen Schwenkachse S1 und S2 derart, dass sich die zweiten Flächenebenen in die Erstreckungsrichtung aufeinander zu erstrecken, ebenso wie die Innenflächenebenen. Aus Fig. 2 ist erkennbar, dass in dem in Fig. 2 gezeigten Zustand, in welchem die Außenflächen 34 und 36 direkt an den die Aufnahme 14 entlang der Abstandsrichtung direkt begrenzenden und entlang der Abstandsrichtung voneinander beabstandeten Innenflächen 38 und 40 anliegen, die jeweilige, zweite Flächenebene und somit die jeweilige Außenfläche 34, 36 mit einer parallel zur Erstreckungsrichtung und somit parallel zur Spannrichtung verlaufenden, auch Erstreckungsebene bezeichneten Ebene einen jeweiligen, ersten Winkel α einschließt, und das die jeweilige Innenflächenebene und somit die jeweilige Innenfläche 38, 40 mit der Erstreckungsebene einen jeweiligen, zweiten Winkel δ einschließt, wobei der Winkel α dem Winkel δ entspricht. Beispielsweise ist der Winkel α der zuvor genannte, erste Winkel, und beispielsweise ist der Winkel δ der zuvor genannte, zweite Winkel. Außerdem sind beispielsweise in dem in Fig. 2 gezeigten Zustand die länglichen Bauteilbereiche L1 und L2 entlang der Spannrichtung, insbesondere direkt, an den Werkzeugteilen 12 und 18 abgestützt, so dass in dem Zustand die länglichen Bauteilbereiche L1 und L2 zwischen den Werkzeugteilen 12 und 18 und mittels der Werkzeugteile 12 und 18 nicht nur entlang der Abstandsrichtung (Doppelpfeil 26), sondern auch entlang der senkrecht zur Abstandsrichtung verlaufenden Spannrichtung (Doppelpfeil 28) geklemmt und dadurch relativ zueinander fixiert werden. In dem Zustand nehmen die länglichen Bauteilbereiche L1 und L2 die Fügeposition F ein, in welcher die länglichen Bauteilbereiche L1 und L2 miteinander gefügt, insbesondere miteinander verschweißt, werden.

Dem jeweiligen Spannfinger 22, 24 kann eine Rückholfeder zugeordnet sein, die dann, wenn die Spannfinger 22 und 24 aus der Ausgangslage aufeinander zu verschwenkt werden, gespannt wird und in der Folge eine als Federkraft ausgebildete Rückstellkraft bereitstellt, mittels welcher beispielsweise dann, wenn die Werkzeugteile 12 und 18 voneinander wegbewegt werden, der jeweilige Spannfinger 22, 24 relativ zu dem Grundkörper 20 zurück verschwenkt wird, insbesondere so lange, bis der jeweilige Spannfinger 22, 24 in Stützanlage mit dem jeweiligen, zugehörigen Anschlag 30, 32 kommt.

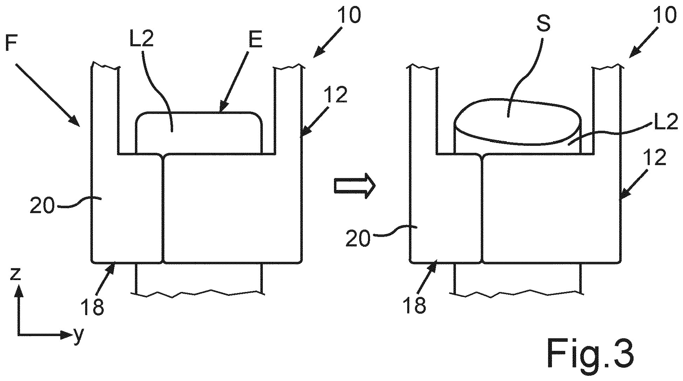

Fig. 3 zeigt die Vorrichtung 10 und die länglichen Bauteilbereiche L1 und L2 in dem in Fig. 2 gezeigten Zustand. Während sich die länglichen Bauteilbereiche L1 und L2 in der Fügeposition F befinden, wird eine insbesondere als Laserschweißung ausgebildete Schweißung durchgeführt, mittels welcher die länglichen Bauteilbereiche L1 und L2 insbesondere mechanisch und elektrisch miteinander verbunden werden. Hierbei werden insbesondere die freien Enden E der länglichen Bauteilbereiche L1 und L2 in der Fügeposition F aufgeschmolzen und miteinander verschmolzen, was so dann mit der Schmelze S in der Fig.3 dargestellt ist.

### Bezugszeichenliste

- 10: Vorrichtung
- 12: erstes Werkzeugteil
- 14: Aufnahme
- 16: Pfeil
- 18: zweites Werkzeugteil
- 20: Grundkörper
- 22: Spannfinger
- 24: Spannfinger
- 26: Doppelpfeil
- 28: Doppelpfeil
- 30: Anschlag
- 32: Anschlag
- 34: Außenfläche
- 36: Außenfläche
- 38: Innenfläche
- 40: Innenfläche
- 42: weitere Innenfläche
- 44: weitere Innenfläche
- 46: weitere Außenfläche
- 48: weitere Außenfläche
- E: Ende
- F: Fügeposition
- L1: länglicher Bauteilbereich
- L2: länglicher Bauteilbereich
- S: Schmelze
- S1: Schwenkachse
- S2: Schwenkachse
- x: Raumrichtung
- y: Raumrichtung
- z: Raumrichtung
- α: Winkel
- δ: Winkel

## Patentansprüche

1. Vorrichtung (10) zum Fügen von länglichen Bauteilbereichen (L1, L2) von Wicklungselementen wenigstens einer Wicklung einer elektrischen Maschine, mit einem ersten Werkzeugteil (12), welches eine Aufnahme (14) aufweist, welche konisch ausgebildet ist und sich dadurch in eine Erstreckungsrichtung (16) verjüngt, und mit einem zweiten Werkzeugteil (18), welches einen Grundkörper (20) und zwei Spannfinger (22, 24) aufweist, die entlang einer senkrecht zur Erstreckungsrichtung (16) verlaufenden Abstandsrichtung (26) voneinander beabstandet und um eine jeweilige, senkrecht zur Erstreckungsrichtung (16) und senkrecht zur Abstandsrichtung (26) verlaufende Schwenkachse (S1, S2) relativ zu dem Grundkörper (20) verschwenkbar an dem Grundkörper (20) gehalten und zum Klemmen der länglichen Bauteilbereiche (L1, L2) zwischen den Spannfingern (22, 24) in die Erstreckungsrichtung (16) in die Aufnahme (14) hineinbewegbar und dadurch aufeinander zu verschwenkbar sind.

2. Vorrichtung nach Anspruch 1,
**dadurch gekennzeichnet, dass**
in einem Zustand, in welchem Außenflächen (34, 36) der Spannfinger (22, 24) direkt an die Aufnahme (14) begrenzenden und entlang der Abstandsrichtung (26) voneinander beabstandeten Innenflächen (38, 40) des ersten Werkzeugteils (12) anliegen, die jeweilige Außenfläche (34, 36) mit einer parallel zur Erstreckungsrichtung (16) und parallel zur jeweiligen Schwenkachse (S1, S2) verlaufenden Ebene einen jeweiligen, ersten Winkel (α) und die jeweilige Innenfläche (38, 40) mit der Ebene einen jeweiligen, zweiten Winkel (δ) einschließt, der dem ersten Winkel (α) entspricht.

3. Vorrichtung (10) nach Anspruch 1 oder 2,
**gekennzeichnet durch**
einen Antrieb, mittels welchem die Spannfinger (22, 24) in die Aufnahme (14) hineinbewegbar sind.

4. Vorrichtung (10) nach einem der vorhergehenden Ansprüche,
**gekennzeichnet durch**
eine Fixiereinrichtung, mittels welcher die Werkzeugteile (12, 18) relativ zueinander fixierbar sind.

5. Verwendung einer Vorrichtung (10) nach einem der vorhergehenden Ansprüche, wobei die Vorrichtung (10) verwendet wird, um länglichen Bauteilbereiche (L1, L2) von Wicklungselementen wenigstens einer Wicklung einer elektrischen Maschine miteinander zu fügen.

## Claims

1. Device (10) for joining elongate component regions (L1, L2) of winding elements of at least one winding of an electrical machine, comprising a first tool part (12) having a receptacle (14) which is conical and thereby tapers in an extension direction (16), and comprising a second tool part (18) having a main body (20) and two clamping fingers (22, 24) which are spaced apart from one another in a spacing direction (26) running perpendicularly to the extension direction (16) and are held on the main body (20) so as to be pivotable about a relevant pivot axis (S1, S2) running perpendicularly to the extension direction (16) and perpendicularly to the spacing direction (26) relative to the main body (20) and are movable into the receptacle (14) in the direction of extension (16) in order to clamp the elongate component regions (L1, L2) between the clamping fingers (22, 24) and are thereby pivotable toward one another.

2. Device according to claim 1,
**characterized in that,**
in a state in which outer surfaces (34, 36) of the clamping fingers (22, 24) directly abut inner surfaces (38, 40) of the first tool part (12), which inner surfaces delimit the receptacle (14) and are spaced apart from one another in the spacing direction (26), the relevant outer surface (34, 36) encloses a relevant first angle (α) with a plane running parallel to the extension direction (16) and parallel to the relevant pivot axis (S1, S2), and the relevant inner surface (38, 40) encloses a relevant second angle (δ) with the plane, which second angle corresponds to the first angle (α).

3. Device (10) according to claim 1 or 2,
**characterized by**
a drive, by means of which the clamping fingers (22, 24) can be moved into the receptacle (14).

4. Device (10) according to any of the preceding claims,
**characterized by**
a fixing device, by means of which the tool parts (12, 18) can be fixed relative to one another.

5. Use of a device (10) according to any of the preceding claims, wherein the device (10) is used to join together elongate component regions (L1, L2) of winding elements of at least one winding of an electrical machine.

## Revendications

1. Dispositif (10) permettant d'assembler des zones de composants allongées (L1, L2) d'éléments d'enroulement d'au moins un enroulement d'une machine électrique, comportant une première partie d'outil (12) qui présente un logement (14) réalisé de manière à être conique et se rétrécissant ainsi dans une direction d'extension (16), et comportant une seconde partie d'outil (18) qui présente un corps formant base (20) et deux doigts de serrage (22, 24) qui sont espacés l'un de l'autre le long d'une direction d'espacement (26) s'étendant perpendiculairement à la direction d'extension (16) et qui sont maintenus sur le corps formant base (20) de manière à pouvoir pivoter par rapport au corps formant base (20) autour d'un axe de pivotement (S1, S2) respectif s'étendant perpendiculairement à la direction d'extension (16) et perpendiculairement à la direction d'espacement (26), et lesquels doigts de serrage, pour serrer les zones de composants allongées (L1, L2) entre les doigts de serrage (22, 24), peuvent se déplacer dans le logement (14) dans la direction d'extension (16) et peuvent ainsi pivoter l'un vers l'autre.

2. Dispositif selon la revendication 1,
**caractérisé en ce**
dans un état dans lequel des surfaces extérieures (34, 36) des doigts de serrage (22, 24) s'appuient directement contre des surfaces intérieures (38, 40) de la première partie d'outil (12) délimitant le logement (14) et espacées l'une de l'autre le long de la direction d'espacement (26), la surface extérieure (34, 36) respective forme, avec un plan s'étendant parallèlement à la direction d'extension (16) et parallèlement à l'axe de pivotement (S1, S2) respectif, un premier angle (α) respectif, et la surface intérieure (38, 40) respective forme avec le plan un second angle (δ) respectif qui correspond au premier angle (α).

3. Dispositif (10) selon la revendication 1 ou 2,
**caractérisé par**
un entraînement au moyen duquel les doigts de serrage (22, 24) peuvent se déplacer dans le logement (14).

4. Dispositif (10) selon l'une des revendications précédentes,
**caractérisé par**
un appareil de fixation au moyen duquel les parties d'outil (12, 18) peuvent être fixées l'une par rapport à l'autre.

5. Utilisation d'un dispositif (10) selon l'une des revendications précédentes, dans laquelle le dispositif (10) est utilisé pour assembler entre elles des zones de composants allongées (L1, L2) d'éléments d'enroulement d'au moins un enroulement d'une machine électrique.
